# EUROPEAN PATENT APPLICATION

(11) **EP 2 081 048 A1**
(43) Date of publication of application: **22.07.2009**
(21) Application number: 08150260.1
(22) Date of filing: 15.01.2008
(51) Int. Cl.: G01S 13/74

(54) **A radar repeater system and a radar repeating method**

(71) Applicant: Nederlandse Organisatie voor Toegepast- Natuurwetenschappelijk Onderzoek TNO, 2628 VK The Hague (NL)
(72) Inventor: Smits, Felix Maria Antonius, 7559CG Hengelo Ov. (NL); Theil, Arne, 2271HA Voorburg (NL); Naus, Henricus Wilhelmus Leon, 2593SG Den Haag (NL)
(74) Representative: Hatzmann, Martin

(57) **Abstract**

The invention relates to a radar repeater system for mitigating a degraded radar zone behind a radar attenuating obstacle. The system comprises a receiving antenna for receiving a radar signal transmitted by a radar system. The system further comprises a transmitting antenna being arranged for retransmitting a radar signal forwarded to the transmitting antenna. The system also comprises an intermediate circuit interconnecting the receiving antenna with the transmitting antenna for forwarding the received radar signal to the transmitting antenna. The receiving antenna, the transmitting antenna and the intermediate circuit form a radar repeater module for repeating a radar signal transmitted by the radar system. Further, the intermediate circuit is arranged for dynamically applying a phase shift to the received radar signal.

## Description

The invention relates to a radar repeater system.

Radar repeater systems are known for illuminating a dark zone behind a large obstacle, e.g. an island. Such a radar repeater system comprises means for repeating and redirecting incident radar waves.

However, also other obstacle types exist, viz. obstacles that generate a degraded radar zone behind the obstacle. As an example, a wind turbine mast and blades generate a zone on its shadow side wherein the incident radar field is significantly degraded but remains present, e.g. as a diffraction pattern having static minima.

When applying a known radar repeater system at an obstacle generating a degraded radar zone, the incident field and the repeated field mutually interfere, thus generating a radar field that has many observation regions of low or zero visibility, static minima, at the angles of destructive interference.

It is an object of the invention to provide a radar repeater system, wherein the disadvantages identified above are reduced. In particular, the invention aims at obtaining a radar repeater system according to the preamble for mitigating a degraded radar zone behind a radar attenuating obstacle. Thereto, according to the invention, the radar repeater system comprises a receiving antenna for receiving a radar signal transmitted by a radar system, the receiving antenna being positioned at a first side of a radar attenuating obstacle directed towards the radar system, and a transmitting antenna positioned at a second side of the radar attenuating obstacle, substantially opposite to the first side, the transmitting antenna being arranged for retransmitting a radar signal forwarded to the transmitting antenna, and an intermediate circuit interconnecting the receiving antenna with the transmitting antenna for forwarding the received radar signal to the transmitting antenna, wherein the receiving antenna, the transmitting antenna and the intermediate circuit form a radar repeater module for repeating a radar signal transmitted by the radar system, and wherein the intermediate circuit is arranged for dynamically applying a phase shift to the received radar signal.

By applying a radar repeater module wherein a radar signal transmitted by a radar system is received at the first side of a radar attenuating obstacle, forwarded to a transmitting antenna via an intermediate circuit and retransmitted by the transmitting antenna positioned at a second side of the radar attenuating obstacle, substantially opposite to the first side, an additional field can be transmitted at the obstacle that can be set to counteract the above-mentioned interference effects. By dynamically applying a phase shift to the received radar signal changing interference patterns are generated so that the occurrence of static minima in the resulting field behind the object is counteracted. As a consequence, the previously static minima are no longer static and on average, the static minima in the degraded radar zone are removed. Further, by transmitting a field by the transmitting antenna, electromagnetic power is directed in the region behind the obstacle, thereby increasing the radar sensibility in the region where the field is attenuated by the presence of the obstacle. As a consequence, a degraded radar zone behind a radar attenuating obstacle is mitigated by the radar repeater system according to the invention.

The invention also relates to a radar repeating method.

Other advantageous embodiments according to the invention are described in the following claims.

By way of example only, embodiments of the present invention will now be described with reference to the accompanying figures in which
Fig. 1 shows a schematic top view of a degraded radar zone generating obstacle;
Fig. 2 shows a schematic side view of a radar repeater system according to the invention;
Fig. 3 shows a radar antenna pattern diagram;
Fig. 4 shows a radar coverage pattern diagram;
Fig. 5 shows a first power level diagram;
Fig. 6 shows a second power level diagram;
Fig. 7 shows a schematic view of a first radar repeater module of a radar repeater system according to the invention; and
Fig. 8 shows a schematic view of a second, additional radar repeater module of a radar repeater system according to the invention.

It is noted that the figures show merely preferred embodiments according to the invention. In the figures, the same reference numbers refer to equal or corresponding parts.

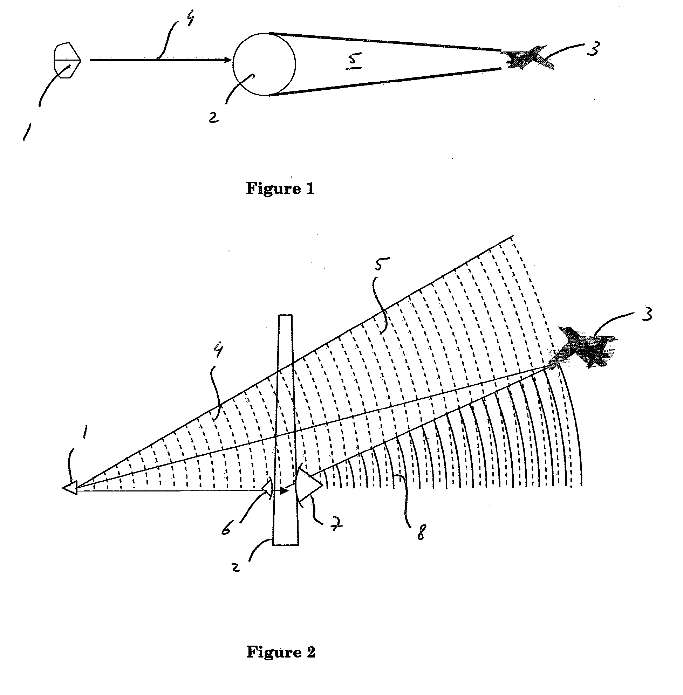

Figure 1 shows a schematic top view of a degraded radar zone generating obstacle 2. The obstacle is a wind turbine mast that is illuminated by a radar signal 4 generated by a radar system 1. Behind the wind turbine mast 2, a degraded radar zone 5 is present wherein the power of the original radar signal is substantially reduced due to the presence of the reflecting properties of the mast 2. Since the power of the radar wave in the degraded radar zone 5 is reduced, it might be difficult to detect and/or trace a target 3 present in said degraded radar zone 5. The radar may e.g. operate in a frequency band ranging from circa 2.7 GHz to circa 2.9 GHz, also known as a S-band. It is noted that other frequency bands could also be applied.

Figure 2 shows a schematic side view of a radar repeater system according to the invention. The radar repeater system comprises a receiving antenna 6 for receiving a radar signal 4 transmitted by the radar system 1. The receiving antenna 6 is positioned at a first side of the mast 2 directed towards the radar system 1, so that the incident wave can be received in an optimal way. The radar repeater system also comprises a transmitting antenna 7 positioned at a second side of the mast 2, substantially opposite to the first side, the transmitting antenna 7 being arranged for retransmitting a repeater signal 8 that has been forwarded to the transmitting antenna 7. Further, the radar repeater system comprises an intermediate circuit (not shown in Figure 2) interconnecting the receiving antenna 6 with the transmitting antenna 7 for forwarding the received radar signal to the transmitting antenna 7. The receiving antenna 6, the transmitting antenna 7 and the intermediate circuit form a radar repeater module for repeating a radar signal transmitted by the radar system 1.

The total radar signal at the position of the target 3 is given by an unblocked radar signal 4 generated by the radar transmitting station 1 in the absence of the wind turbine mast 2 subtracted by mast blocking radar signal 5 added to the repeater signal 8 transmitted by the transmitter 7.

Apart from a constant phase shift, the phase difference between the unblocked radar signal 4 and the mast blocking radar signal is approximately zero, since the mast blocking radar signal is generated by a mast section along the direct path from the radar transmitting station 1 to the target 3. Further, as schematically shown in Figure 2, the phase difference between the unblocked radar signal 4 and the repeater signal 8 transmitted by the transmitter 7 is not constant and varies as a function of the elevation angle of the target 3 with respect to the radar transmitting station 1, thus causing an interference pattern having local static minima.

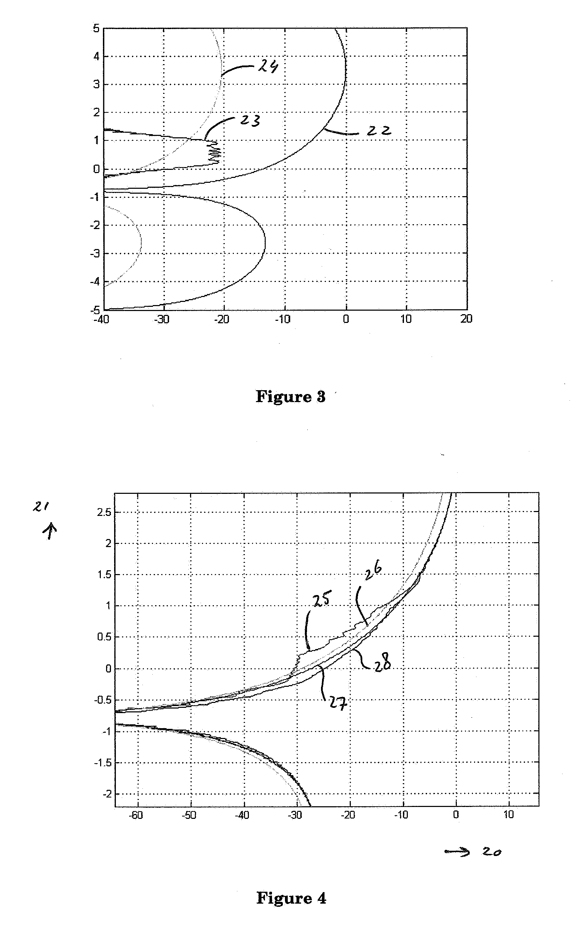

Figure 3 shows a radar antenna pattern diagram. In the diagram, a power density of signals 20 is provided at the horizontal axis on a logarithmic scale, while an elevation angle 21 is provided at the vertical axis. The diagram provides three curves, viz. an unblocked power curve 22, a blocked power curve 23 representing power that is blocked by the mast, and a maximum power curve 24 indicating an allowed maximum blocked power as a function of the elevation angle 21. It is noted that the actual blocked power curve 23 exceeds the allowed maximum blocked power.

Fig. 4 shows a radar coverage pattern diagram showing similar information for the combined paths of radar transmission path towards the target and return path from the target towards the radar. In particular, the second diagram comprises four curves, viz. a curve 25 representing the total power received at the radar 1 from a target 3 wherein the total power comprises the three radar signal components as indicated above in both transmission path direction and return path direction, a curve 26 representing a minimum required power level from a target received by the radar 1 as a function of the elevation angle, a curve 27 representing the unblocked power from a target received by the radar and a curve 28 representing the total power from a target received by the radar using a phase shifting technique described below. Again, it is noted that the actual total power 25 is lower than the minimum required power level at certain elevation angles. Further, total power 28 obtained while transmitting the repeater power and applying a shifting technique according to the invention in the direction of the target and while retransmitting the reflected power from the target towards the radar and applying a phase shifting technique to this signal according to the invention, satisfies the minimum required power level.

According to the invention, the intermediate circuit is arranged for dynamically applying a phase shift to the received radar signal. By dynamically shifting the phase of the repeater signal, the signal transmitted by the transmitter 7 changes over time, thereby changing the interference pattern with the radar signal blocked by the mast 2.

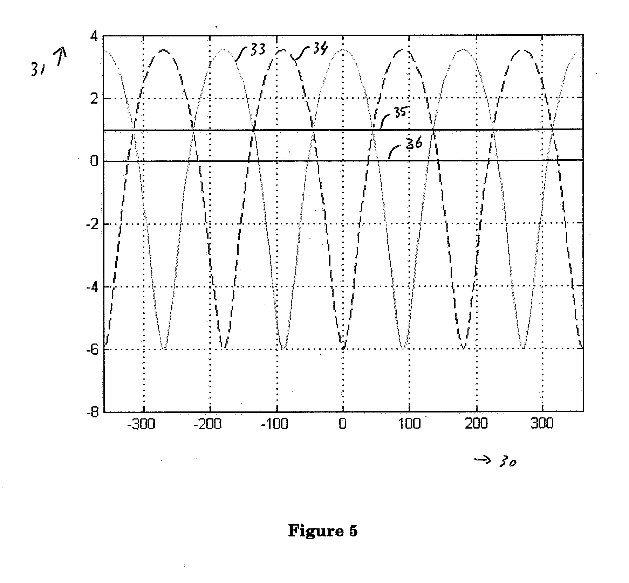

Figure 5 shows a first power level diagram of the signal transmitted by the transmitter 7. Here, the power of the repeater transmitter 7 is substantially 50% of the unblocked power minus the power blocked by the mast. The diagram shows a first total power signal 33 and a second total power signal 34 representing an interference pattern corresponding to a repeater transmitted signal having no phase shift and a repeater transmitted signal having a phase shift of 180 degrees, respectively, with respect to the blocked radar signal. The total signal power is shown on a logarithmic scale depending on a phase difference between the unblocked power minus the power blocked by the tower on the one hand and the signal transmitted by the transmitter on the other hand. The lower power level 36 represents the signal power at the target corresponding to the situation wherein no repeater signal is applied, while the higher power level 35 represents the averaged power level over time using repeater signal with the phase shifting method normalized with respect to the earlier situation. Clearly, the power has gained with 1dB.

Thus, the degraded radar zone 5 behind mast 2 has been mitigated.

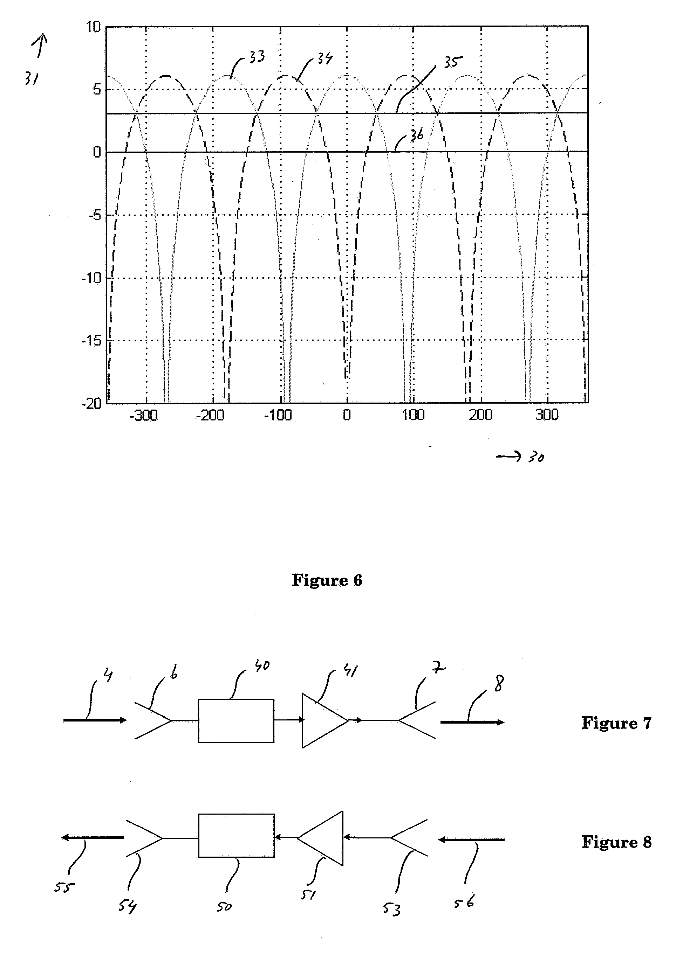

Figure 6 shows a second power level diagram of the signal transmitted by the transmitter 7. Here, the power of the repeater transmitter 7 is substantially 100% of the unblocked power minus the power blocked by the tower. The diagram shows similar results as Figure 6. In particular, the averaged power has gained 3dB by using the repeater signal with the phase shift technique. The increased averaged power is due to the increased power of the radar repeater transmitter 7.

In an embodiment according to the invention, the applied phase shift is changed after a single radar pulse period. In an alternative embodiment, the applied phase shift is changed after a single radar burst period, the burst comprising a multiple number of single radar pulses.

Advantageously, a phase from a phase sequence can subsequently and periodically be applied to the received radar signal. As such, a phase sequence can be defined, e.g. 0 degrees, 120 degrees, 240 degrees for averaging number 3, which sequence is subsequently applied to the received radar signals. By changing the phase with 360 degrees divided by the averaging number N per interval, a stable average signal power is available in the zone behind the mast, even in case of an odd number of pulses or bursts per averaging period, thereby mitigating the degraded radar zone also for odd-numbered averaging cycles.

In a particular embodiment according to an aspect of the invention, a phase shift of substantially zero and a phase shift of substantially 180 degrees are applied to the received radar signal in an alternating way, thereby providing a relatively simple, effective phase shifting scheme.

Optionally, the intermediate circuit is arranged for amplifying the received radar signal, thereby improving the performance of the radar repeater system. The amplification factor can be chosen such, that losses occurring in the signal path are compensated. However, the amplification factor can also be chosen higher, thereby over compensating any losses in the signal path. As a result, the region behind the obstacle is more illuminated and the sensitivity of the radar systems can improve. Alternatively, by using relatively large antennas and/or low loss components also a signal power level can be obtained that satisfies a pre-determined degree without amplifying the received radar signal.

Fig. 7 shows a schematic view of a radar repeater module of a radar repeater system according to the invention for implementing a transmitting path. The radar repeater module comprises a receiving antenna 6 for receiving an incident radar signal 4, an intermediate circuit and a transmitting antenna 7 for transmitting a repeated radar signal 8. The intermediate circuit comprises a phase matching circuit 40 and an amplification unit 41. The phase matching circuit 40 can be activated by a switch control unit comprising a device that is arranged for detecting radar pulses and/or radar bursts and/or radar RF frequencies to define and change the phase shift that has to be applied.

According to an aspect of the invention, the radar repeater system comprises an additional radar repeater module for repeating a reflected radar signal towards the radar system. By applying the additional radar repeater module, the sensitivity of the radar system in the region behind the mast is further increased.

Fig. 8 shows a schematic view of the additional radar repeater module of a radar repeater system according to the invention for implementing a receiving path. The additional radar repeater module comprises a receiving antenna 53 for receiving a radar signal 56 that has been reflected by a target, an intermediate circuit and a transmitting antenna 54 for transmitting a repeated radar signal 55. The intermediate circuit comprises an amplification unit 51 and a phase matching circuit 50.

According to a further aspect of the invention, a radar measurement comprises at least two phase shift sequences. By making suitable choices for the amplification factors and phase shifts of the transmitting path relative to the receiving path during both radar pulses, it has been found that the average received power at the radar station is substantially independent of the elevation. This can be made clear by considering the amplitudes and phases of the radar signal components and assuming that the unblocked radar signal and the mast blocking signal are coherent. In particular, in the case when merely a transmitting repeating path is implemented, the amplification factor during the two radar pulse evaluations can be chosen opposite to each other to obtain the desired averaged received power that is independent of the elevation angle and the power level of the repeater can be chosen to be sufficiently high as to compensate for blocking in both the transmit path and the receive path.

Further, if also a repeating receiving path has been implemented, the amplification factor in the transmitting path can be chosen opposite to the amplification factor in the receiving path for both pulses. By choosing the amplification factor in the transmitting path during the second pulse as the amplification factor during the first pulse multiplied with the positive or negative imaginary unit, it has also been found that the average received power at the radar station is independent of elevation.

In a preferred embodiment according to the invention, the receiving antenna of the radar repeater module is integrated with the transmitting antenna of the additional radar repeater module. By using dedicated electronic circuit components, suitable signal paths can be provided so that a single antenna can be used for both receiving the radar signal transmitted by the radar transmitting station and for transmitting a reflected radar signal. Similarly, it is preferred to integrate the transmitting antenna of the radar repeater module with the receiving antenna of the additional radar repeater module.

In an advantageous way, an antenna is located below a blade rotating zone of a wind turbine, thereby counteracting aerodynamics of the rotor blades. Preferably, an antenna is located near a lower blade rotating zone of the wind turbine thereby optimizing the range of the radar repeating system.

The invention is not restricted to the embodiments described herein. It will be understood that many variants are possible.

Instead of using the radar repeater system according to the invention for mitigating a degraded radar zone behind a wind turbine mast, the radar repeater system according to the invention can also be applied in combination with other degraded radar zones generating obstacles, such as high buildings, towers, radio masts, etc.

It is noted that the radar system 1 illustrated in the figures is a system generating primary radar signals. However, as an alternative, the radar system can in principle also be implemented as a further radar repeater system, so that a radar signal is repeated more than once before reaching a radar zone with degraded target visibility.

Other such variants will be obvious for the person skilled in the art and are considered to lie within the scope of the invention as formulated in the following claims.

## Claims

1. A radar repeater system for mitigating a degraded radar zone behind a radar attenuating obstacle, comprising a receiving antenna for receiving a radar signal transmitted by a radar system, the receiving antenna being positioned at a first side of a radar attenuating obstacle directed towards the radar system, further comprising a transmitting antenna positioned at a second side of the radar attenuating obstacle, substantially opposite to the first side, the transmitting antenna being arranged for retransmitting a radar signal forwarded to the transmitting antenna, and an intermediate circuit interconnecting the receiving antenna with the transmitting antenna for forwarding the received radar signal to the transmitting antenna, wherein the receiving antenna, the transmitting antenna and the intermediate circuit form a radar repeater module for repeating a radar signal transmitted by the radar system, and wherein the intermediate circuit is arranged for dynamically applying a phase shift to the received radar signal.

2. A radar repeater system according to claim 1, further comprising an additional radar repeater module for repeating a reflected radar signal towards the radar system.

3. A radar repeater system according to claim 2, wherein the receiving antenna of the radar repeater module is integrated with the transmitting antenna of the additional radar repeater module.

4. A radar repeater system according to any of the previous claims, wherein the transmitting antenna of the radar repeater module is integrated with the receiving antenna of the additional radar repeater module.

5. A radar repeater system according to any of the previous claims, wherein an antenna is located below a blade rotating zone of a wind turbine, preferably near a lower blade rotating zone of the wind turbine.

6. A radar repeater system according to any of the previous claims, wherein the intermediate circuit is arranged for amplifying the received radar signal.

7. A radar repeating method for mitigating a degraded radar zone behind a radar attenuating obstacle, comprising the steps of:
- receiving a radar signal transmitted by a radar system at a first side of a radar attenuating obstacle, the first side being directed to the radar system;
- forwarding the received radar signal to a transmitting antenna via an intermediate circuit;
- retransmitting the forwarded radar signal by the transmitting antenna positioned at a second side of the radar attenuating obstacle, substantially opposite to the first side,
wherein the transmitting step comprises dynamically applying a phase shift to the received radar signal.

8. A radar repeating method according to claim 7, wherein the applied phase shift is changed after a single radar pulse period.

9. A radar repeating method according to claim 7, wherein the applied phase shift is changed after a single radar burst period.

10. A radar repeating method according to any of claims 7-9, wherein a phase from a phase sequence is subsequently and periodically applied to the received radar signal.

11. A radar repeating method according to any of claims 7-10, wherein the phase shifts of the phase sequence are substantially evenly distributed over 360 degrees.

12. A radar repeating method according to any of claims 7-11, wherein a phase shift of substantially zero and a phase shift of substantially 180 degrees are applied to the received radar signal in an alternating way.

13. A radar repeating method according to any of claims 7-12, comprising performing a first phase shifting process and a second phase shifting process, wherein an amplification factor in a transmission path during the second phase shifting process is chosen opposite to the amplification factor in the transmission path during the first phase shifting process.

14. A radar repeating method according to any of claims 7-12; comprising performing a first phase shifting process and a second phase shifting process, wherein an amplification factor in a transmitting path is chosen opposite to an amplification factor in a receiving path for both pulses, while the amplification factor in the transmitting path during the second pulse is formed by the amplification factor during the first pulse multiplied with the positive or negative imaginary unit.
